Europäisches Patentamt

European Patent Office

Office européen des brevets

(19)

(11) Numéro de publication : **0 148 804**
**B1**

(12) **FASCICULE DE BREVET EUROPÉEN**

(45) Date de publication du fascicule du brevet :
11.11.87

(21) Numéro de dépôt : 85400038.7

(22) Date de dépôt : 09.01.85

(51) Int. Cl.⁴ : **F 27 B 9/24**, F 27 B 9/30

(54) **Four à barres pour cuisson rapide en continu ou en intermittent des produits céramiques.**

(30) Priorité : 10.01.84 FR 8400312

(43) Date de publication de la demande :
17.07.85 Bulletin 85/29

(45) Mention de la délivrance du brevet :
11.11.87 Bulletin 87/46

(84) Etats contractants désignés :
AT BE CH DE GB IT LI LU NL SE

(56) Documents cités :
EP-A- 0 086 693
DE-A- 3 031 474
FR-A-   893 570
FR-A- 2 323 647
US-A- 4 338 078

(73) Titulaire : **OCCIDENTAL INDUSTRIES**
**3, rue La Boétie**
**F-75008 Paris (FR)**

(72) Inventeur : **Melayah, Rachid**
**80 Rue de la Roquette**
**F-75011 Paris (FR)**

(74) Mandataire : **Phélip, Bruno et al**
**c/o Cabinet Harlé & Phélip 21, rue de la Rochefoucauld**
**F-75009 Paris (FR)**

Jouve, 18. rue St-Denis, 75001 Paris, France

## Description

L'invention est du domaine des fours à passage et intermittents. Elle vise plus précisément un four tunnel à passage à barres pour la cuisson rapide en continu ou en intermittent des produits céramiques.

Jusqu'à présent, dans les fours tunnel de type classique, les charges à cuire étaient véhiculées par un train continu de wagons. Ce train, tout en se déplaçant, constitue la face inférieure fermée du four. Pour cette raison, les wagons étaient revêtus d'un garnissage en matériau réfractaire qui, à chaque passage, subissait un échauffement suivi d'un refroidissement au même titre que les produits à cuire, et il en résultait une consommation d'énergie que les constructeurs de fours s'efforçaient de réduire par allègement de ces wagons et en leur conférant une meilleure isolation.

Un objet de l'invention est de réaliser un four à barres, qui élimine les inconvénients d'un train de wagons classiques garnis de réfractaires.

Un autre objet de l'invention est de fournir un four à barres dont la sole devient fixe et partie intégrante du four, ce qui fait que la masse véhiculée est réduite au minimum.

Encore un autre objet de la présente invention est de réaliser un four à barres de conception nouvelle, dont les charges à cuire sont pesées directement sur une succession de barres transversales horizontales, qui traversent le four de piédroit à piédroit avec ou sans appui intermédiaire, ces barres étant espacées entre elles et reposant à leurs extrémités sur des longerons mobiles qui se déplacent entre les parties, supérieure et inférieure, fixes du four.

La présente invention a donc pour objet un four tunnel à passage, comportant un certain nombre de barres pour la cuisson rapide de produits industriels, notamment de produits céramiques, ce four comportant une structure à piédroits coupés, constituée d'une sole fixe et d'une voûte et reliées par un système d'entretoisement discontinu, et un train porteur mobile constitué par des longerons auxquels sont associées des barres porteuses destinées à recevoir les produits à cuire, et s'étendant transversalement dans le four de piédroit à piédroit avec ou sans appui intermédiaire.

Dans une forme particulière de réalisation pour four tunnel à barres selon l'invention, le système d'entretoisement entre la partie supérieure du four ou voûte et la partie inférieure ou sole, est constitué par des vérins mécaniques espacés les uns des autres.

Les longerons sont constitués avantageusement d'une ossature métallique latérale enveloppant de la fibre réfractaire, et montée sur des galets coopérant avec un système de rails de guidage. Les barres porteuses sont constituées en matériau céramique, en matériau réfractaire ou en métal, elles peuvent reposer directement ou être fixées sur les longerons.

Aux barres porteuses, sont éventuellement associés soit un système de barres auxiliaires disposées au droit desdites barres porteuses, ou bien des plaques perforées minces en matière céramique disposées en des endroits appropriés desdites barres porteuses.

L'association des barres porteuses et de la structure à piédroits coupés permet de libérer un espace inférieur, du fait de l'élimination des infrastructures nécessaires au passage des wagons, permettant ainsi l'installation tout au long du four de collecteurs de chaleur et d'équipements thermiques, qui par leur efficacité d'échange contribuent à une meilleure isothermie et donc à une réduction des temps de cuisson couramment pratiqués.

En zone de cuisson, pour certaines applications, l'installation d'un moufle performant horizontal et de très faible inertie est désormais rendu possible, un moufle supérieur et inférieur pouvant même être réalisé.

Dans l'agencement de la présente invention, en préchauffe, qu'il s'agisse de fours « moufle », « semi-moufle », en flamme libre, électrique ou bi-énergie, les produits de combustion et les injections d'air chaud issus du refroidissement rapide sont canalisés sous toute la surface de la sole, qui ainsi rayonne sous les produits à la manière d'une plaque chauffante sous un récipient.

En refroidissement, le système de refroidissement inversé possible selon la présente invention et constitué par des soufflages supérieurs et des reprises de l'air chaud en sole, améliore grandement l'homogénéité et donc l'efficacité du refroidissement et cela d'autant plus qu'il n'est plus nécessaire de prévoir des infrastructures réfractaires de wagonnets.

Dans une réalisation particulière en four intermittent, possible selon la présente invention, le four à barres présente la même coopération de moyens de barres transversales montées sur longerons latéraux et de structure à piédroits coupés selon la présente invention. Toutefois, sa forme générale est celle d'un boyau coupé horizontalement en 2 au niveau du plan des barres porteuses, tandis que sa section et son équipement de chauffe sont identiques sur toute sa longueur ce qui permet de le réaliser en four modulaire de longueur correspondant au besoin de l'utilisateur.

D'autres avantages et caractéristiques de l'invention apparaîtront à la lecture de la description suivante de formes de réalisation de four tunnel à barres selon l'invention, en référence aux dessins annexés, dans lesquels :

Fig. 1 représente en coupe transversale au niveau des barres, une forme de réalisation de four tunnel selon l'invention à zones de chauffage supérieure et inférieure par brûleur ;

Fig. 2 représente une seconde forme de réalisation de four tunnel à barres selon l'invention, en coupe transversale au niveau des barres, avec moufle radiant inférieur et brûleurs sous-jacents ;

Fig. 3 représente schématiquement en perspective un train porteur mobile de cuisson notamment utilisable dans un four tunnel destiné à la cuisson des produits sanitaires ou autres ;

Fig. 4 représente, en coupe verticale axiale au droit d'une barre porteuse, un détail de l'agencement latéral du train porteur ;

Fig. 5 représente une vue en coupe transversale axiale partielle entre barres porteuses ;

Fig. 6 représente une vue partielle en coupe verticale axiale d'un four plat pour cuisson d'éléments céramiques de type carreaux ;

Fig. 7 représente, en coupe transversale, un ensemble de four tunnel à barres selon l'invention ;

Fig. 8 représente, en coupe transversale, un four tunnel à barres selon l'invention à structure de refroidissement rapide ;

Fig. 9 représente, en coupe transversale, un four tunnel à barres selon l'invention à structure de refroidissement lent ; et

Fig. 10 représente un four tunnel à barres de préchauffe selon l'invention, en coupe transversale.

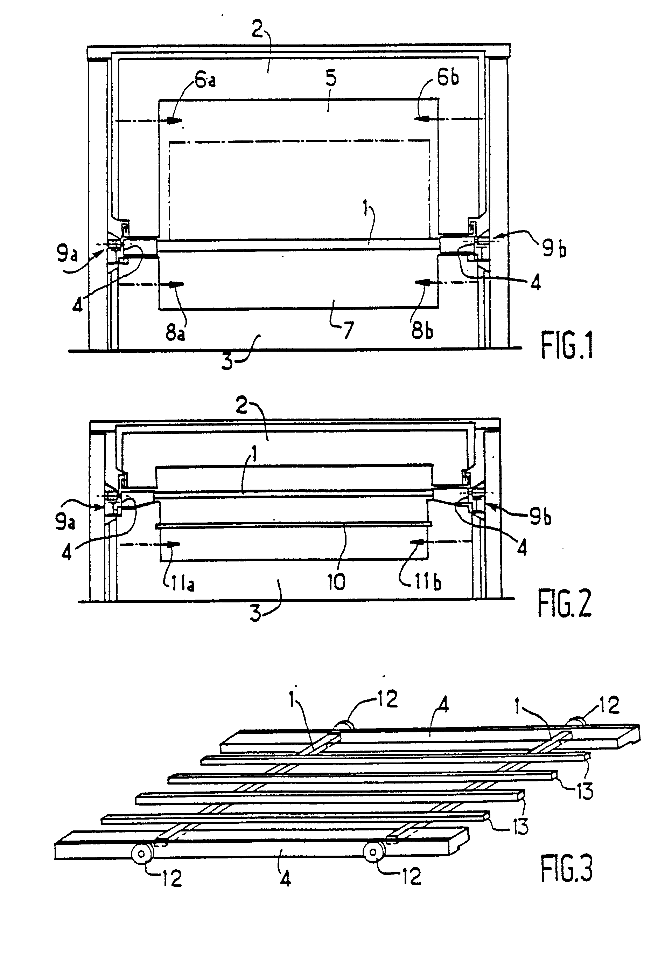

Dans la forme de réalisation de la figure 1, le four tunnel à barres selon l'invention est constitué de barres porteuses 1, d'une partie statique supérieure 2 et d'une partie statique inférieure 3. Les barres porteuses 1 sont associées à des longerons latéraux 4 faisant partie d'un train mobile support des barres qui sera décrit plus en détail dans ce qui suit. La partie statique supérieure 2 comporte une zone de chauffage supérieure 5 pourvue de brûleurs latéraux 6a, 6b tandis que le tracé en tiretés indique la limite d'un gabarit de charge haute. La partie statique inférieure 3 comporte une zone de chauffage inférieure 7 pourvue de deux séries de brûleurs latéraux 8a, 8b. Sur ces deux figures, apparaissent clairement les structures latérales de piédroits coupés 9a, 9b selon l'invention.

Dans la forme de réalisation de la figure 2, le four tunnel à barres est un four constitué également de trois parties distinctes indépendantes, comme dans la figure 1, à savoir la structure de barres porteuses 1, la partie statique supérieure 2 et la partie statique inférieure 3. Toutefois, on remarquera que cette conception de four tunnel à barres selon l'invention permet le montage d'un moufle radiant inférieur 10 associé dans la partie inférieure 3 à deux séries de brûleurs 11a, 11b. Dans cette forme de réalisation, la structure à piédroits coupés 9a, 9b de l'invention apparaît également clairement.

Le train mobile de support de barres représenté sur la figure 3 est constitué de deux longerons latéraux 4 sur lesquels repose ou est fixé un certain nombre de barres transversales horizontales le four de piédroit à piédroit. Les longerons 4 sont associés à des galets 12 selon un agencement qui sera décrit plus en détail dans ce qui suit. Dans cette forme de réalisation le train support mobile de cuisson, un certain nombre de barres auxiliaires 13 repose sur les barres porteuses 1 parallèlement aux longerons 4. Ces barres auxiliaires peuvent être remplacées éventuellement par des plaques perforées ou non minces et disposées sur les barres porteuses.

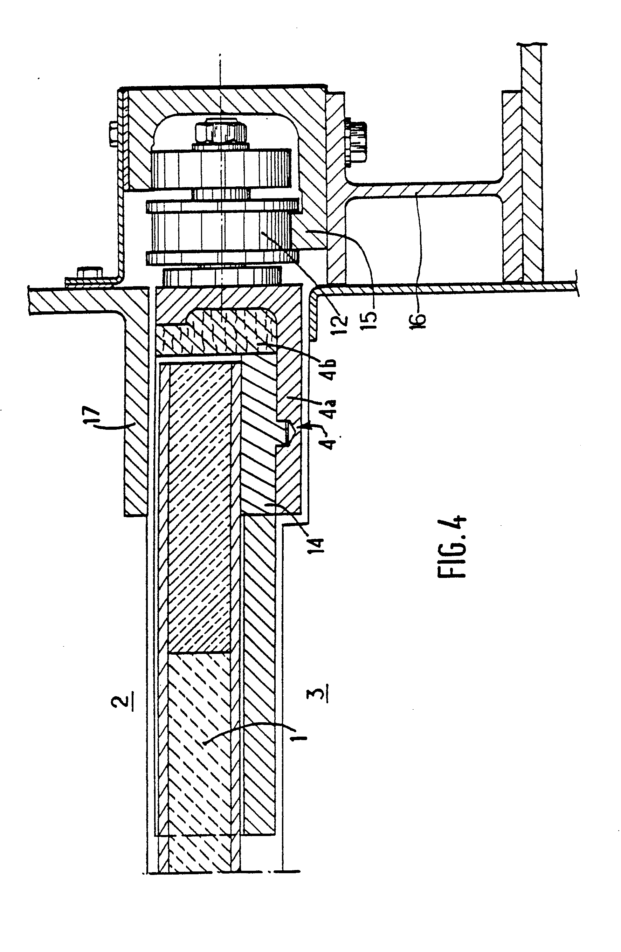

Sur la figure 4, la barre porteuse 1, en matériau céramique, repose par ses extrémités sur un longeron respectif 4a, par l'intermédiaire d'une pièce de jonction en cordiérite 14 qui s'appuie sur le profilé 4a du longeron sur la face latérale duquel est monté un galet 12 reposant sur un rail 15 solidaire d'un profilé porteur 16. Un profilé de guidage supérieur 17 est également prévu pour l'ensemble longeron 4a.

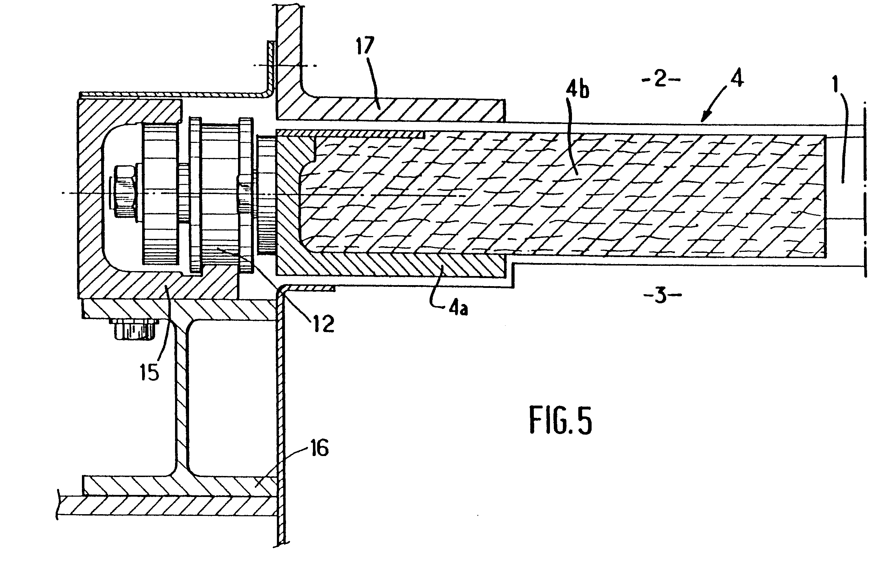

La figure 5 qui est une coupe partielle entre barres porteuses, représente plus en détail l'isolant 4b en fibres compactes réfractaires du longeron 4 avec son profilé latéral 4a sur lequel est monté pivotant un galet porteur 12 reposant sur son rail 15.

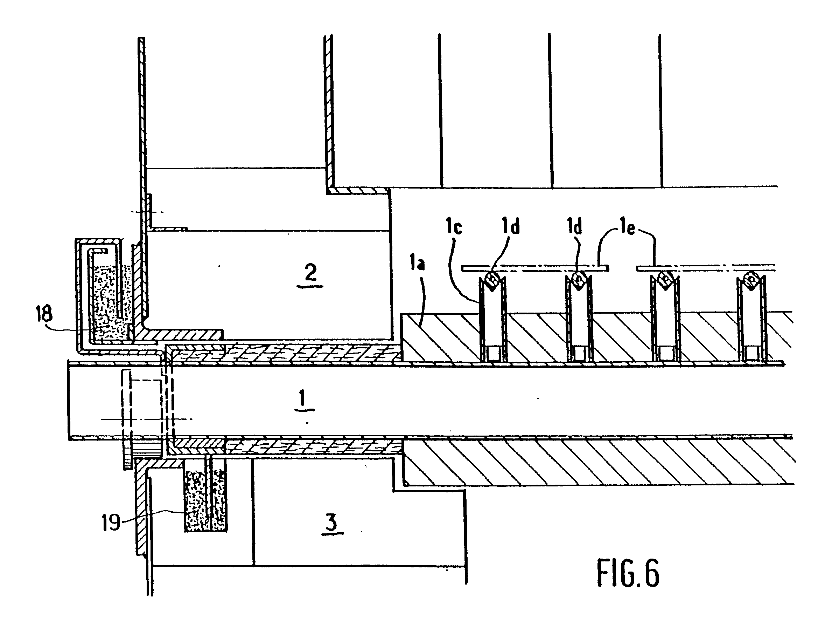

La figure 6 représente une forme de réalisation particulière de barres porteuses 1, notamment destinée à des fours de cuisson pour élément plat du type carreaux.

Cette barre porteuse 1, en profilé d'acier, est enveloppée d'un revêtement réfractaire 1a traversé par des éléments supports 1c solidaires de la barre 1 et comportant à leurs extrémités libres une structure réfractaire arrondie 1d destinée à recevoir deux éléments plats du type carreaux représentés en tiretés 1e. Apparaissent également sur cette figure des agencements de joints d'étanchéité 18, 19 pour les zones statiques supérieure 2 et inférieure 3, respectivement.

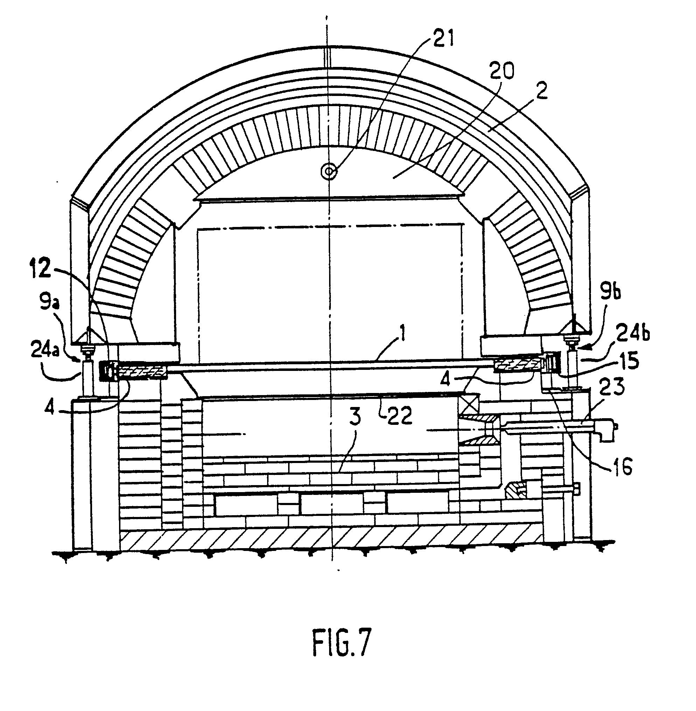

Sur la figure 7, est représentée la zone de cuisson, un four tunnel à barres selon l'invention, comportant un système de chauffe à moufles radiants supérieur et inférieur. Ce four comporte, selon l'invention, une partie statique supérieure ou voûte 2 conformée en moufle radiant supérieur 20 associée à une série de brûleurs 21, et une partie statique inférieure ou sole 3 conformée pour présenter un moufle radiant inférieur 22 associé à plusieurs séries de brûleurs latéraux dont l'un 23 est représenté au dessin. Chaque barre 1 traverse le four de piédroit à piédroit en venant s'appuyer par ses extrémités sur les longerons longitudinaux 4 qui se déplacent par l'intermédiaire des galets 12 reposant sur la structure porteuse de guidage 15, 16. Sur cette figure, les zones de piédroits coupés 9a, 9b, du four apparaissent clairement, ainsi que la structure d'entretoisement à vérins espacés 24a, 24b, respectivement.

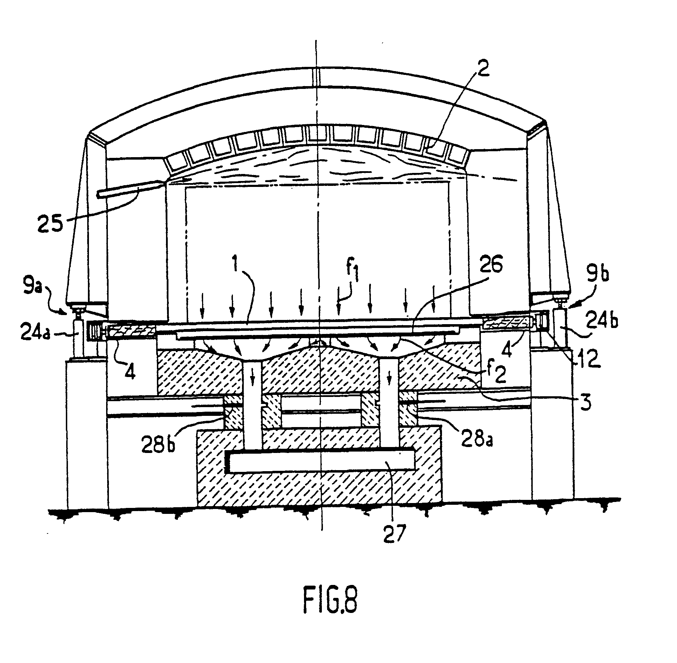

La figure 8 représente une coupe d'un four tunnel de l'invention, au niveau de sa zone de refroidissement, de structure particulièrement adaptée pour un refroidissement rapide des produits de cuisson, la structure de piédroits coupés 9a, 9b, coopérant avec le train support mobile de barres porteuses 1, 4, 12 qui est identique à celui représenté à la figure 7 et décrit précédemment plus en détail.

Dans cette zone de refroidissement rapide, sont prévus des soufflages d'air froid 25 à la partie supérieure du four et à l'agencement de reprise d'air chaud au-dessous des barres porteuses 1. La reprise d'air chaud se fait selon l'invention à travers des plaques perforées 26 par lesquelles l'air de la zone supérieure 2 communique selon les flèches f1, f2, f3 avec un compartiment inférieur 27 auquel sont associés deux dispositifs de réglage latéraux 28a, 28b. Un tel système de refroidissement inversé est constitué d'un soufflage d'air froid supérieur 25 et d'un dispositif de reprise d'air chaud inférieur 26, 27, en sole améliore dans une large mesure l'homogénéité et donc l'efficacité du refroidissement, ce résultat étant la conséquence de la structure particulière de four à piédroits coupés selon l'invention.

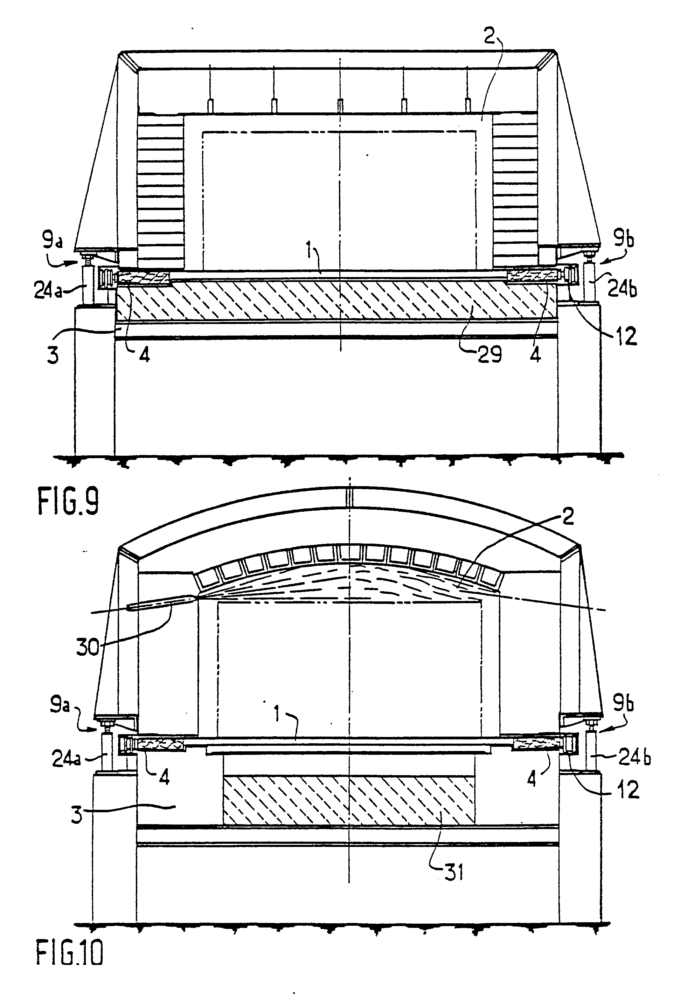

Dans la forme de réalisation de four tunnel à barres de l'invention Fig. 9 comportant une zone de refroidissement lent, les structures de barres 1-longerons 4-galet porteur 12 et de structure de piédroit coupé 9a, 9b sont identiques à celles décrites dans les formes de réalisation des figures 7 et 8. Toutefois, afin de réduire au minimum la déperdition de calories et d'obtenir ainsi un processus de refroidissement lent, on a prévu, selon l'invention, une structure réfractaire sous-jacente 29 aux barres 1. Cette forme de four est notamment applicable aux pièces de fort gabarit, telles que représentées en tiretés sur la figure 9.

Sur la figure 10, sont représentées deux zones de préchauffe d'un four à refroidissement rapide, tel que représenté sur la figure 8, et dont l'air chaud de refroidissement rapide est injecté par série de buses latérales au niveau de la voûte 2, dont l'une 30 est représentée avec le dessin. La structure de barres porteuses et de piédroits coupés est identique à celle représentée aux figures 7 à 9. Toutefois, on a prévu une structure réfractaire 31 sous-jacente aux barres 1 et ménageant un espace entre ces dernières pour le passage des fumées du moufle.

Les matériaux que l'on utilise pour la fabrication des fours tunnel à barres selon l'invention sont ceux habituellement mis en œuvre dans la fabrication des fours de type classique. Toutefois, au niveau des barres, ces dernières sont constituées d'un profilé creux de nature et de caractéristique mécanique adaptées à la nature et au cycle de cuisson envisagés. Ainsi ces barres seront de simples profilés en acier ordinaire (avec ou sans garnissage) ou en acier réfractaire pour des températures basses et de cycle très rapide ; elles seront en matériaux céramiques à forte teneur en alumine ou à base de carbure de silicium pour des températures plus élevées. Ces barres porteuses sont solidaires de l'ossature métallique des longerons. Elles peuvent être simplement posées sur des supports céramiques appropriés lorsqu'elles sont en matériaux céramiques ou réfractaires. Dans tous les cas, les longerons recevront un garnissage isolant qui restitue l'isolation au droit de la coupure des piédroits. L'étanchéité du four à ce niveau sera réalisée soit de façon classique par joint de sable, soit par caisson étanche.

En fonctionnement le train de barres 1-longerons 4-galets 12 se déplacera sous l'action d'un système classique de poussée assurant un déplacement ordonné du train de barres de l'entrée vers la sortie sans contact avec les éléments statiques du four autres que des joints d'étanchéité appropriés.

On peut également envisager que les éléments porteurs de charge se déplacent par glissement à la manière de patins glissants ou par roulage sur une nappe de billes ou de rouleaux.

Ainsi se trouve réalisé selon l'invention un four tunnel permettant de s'affranchir des wagons classiques gros consommateurs d'énergie, et permettant d'installer leur emplacement devenu libre un récupérateur horizontal performant dans toutes les applications nécessitant un écran entre les fumées et les produits à cuire, et ce grâce à une combinaison entre un train support mobile de barres espacées avec une structure de four à piédroit coupé. Cette nouvelle conception de four, notamment applicable à des fours à température élevée, c'est-à-dire supérieure à 1000 °C, permet une économie d'énergie considérable, car il n'est plus nécessaire de chauffer les wagonnets, ce qui se traduit par un meilleur cycle de cuisson et une homogénéité de chauffe, et en particulier dans les fours bas à barres, cette conception permet le chauffage en partie basse du four, permettant ainsi une collecte plus rapide des fumées d'où un chauffage également plus rapide. Cette conception permet également l'utilisation de matériaux réfractaires de garnissage plus léger, notamment pour la réalisation de four à barres.

En outre ce type de four s'applique à la cuisson en continu ou en intermittent de différents produits céramiques et autres, sans qu'il soit nécessaire de prévoir d'infrastructures de wagonnets transitant dans le four, ce qui permet l'installation à leur place d'équipements thermiques performants tels que décrits ci-dessus.

L'invention s'étend également, à titre de produits industriels nouveaux, aux fours tunnels à passage comportant une structure à piédroits coupés.

**Revendications**

1. Four à barres ou à passage pour cuisson rapide de produits industriels, notamment de produits céramiques, caractérisé par le fait qu'il comporte une structure à piédroits coupés, constituée d'une partie statique inférieure ou sole (3) et d'une partie statique supérieure ou voûte (2) reliées par un système d'entretoisement discontinu (24a, 24b), ainsi qu'un train porteur mobile constitué par des longerons latéraux (4) auxquels sont associées des barres porteuses (1), destinées à recevoir les produits à cuire et s'étendant transversalement dans le four de piédroit à piédroit avec ou sans structure de support intermédiaire.

2. Four à barres selon la revendication 1, caractérisé en ce que le système d'entretoisement entre les parties supérieure (2) inférieure (3) du four est constitué par des vérins mécaniques (24a, 24b) espacés les uns des autres dans la zone de piédroits coupés (9a, 9b).

3. Four à barres selon la revendication 1, caractérisé en ce que les longerons (4) sont en métal isolé par de la fibre réfractaire compacte (4b) et comportent une ossature latérale (4a) sur laquelle sont montés des galets (12) se déplaçant sur des rails (15).

4. Four à barres selon la revendication 1, caractérisé en ce que les barres (1) sont constituées par des profilés creux, en un matériau choisi parmi les aciers ordinaires, les aciers réfractaires, les matériaux de céramiques à forte teneur en alumine ou les matériaux céramiques à base de carbure de silicium recristallisé ou non.

5. Four à barres selon l'une quelconque des revendications 1 à 4, caractérisé en ce qu'est prévu un système de barres auxiliaires (13) disposées au droit des barres porteuses (1) parallèlement aux longerons (4).

6. Four à barres selon l'une quelconque des revendications 1 à 5, caractérisé en ce qu'il comporte un système de refroidissement inversé constitué par un dispositif de soufflage supérieur (25) et de reprise de l'air chaud (26, 27) au niveau de la sole (3).

7. Four à barres selon l'une quelconque des revendications 1 à 4, caractérisé en ce que sont prévues des plaques perforées ou non, minces en matière céramique disposées sur les barres porteuses.

8. Four à barres selon l'une des revendications 1 à 7, caractérisé en ce qu'il comporte une zone de refroidissement lent présentant au niveau de la sole (3) et immédiatement sous-jacent au train de barres porteuses (1) une structure en matière réfractaire (29).

## Claims

1. Bar kiln or continuous kiln for rapid firing of industrial products, especially ceramic products, characterized in that it comprises a structure of sectioned dividing walls which consists of a stationary lower part or hearth (3) and of a stationary upper part or roof (2) which are connected by a discontinuous bracing system (24a, 24b), as well as a mobile carriage consisting of lateral side rails (4) with which there are associated carrying bars (1), intended to receive the products to be fired and extending transversely in the kiln from dividing wall to dividing wall with or without an intermediate support structure.

2. Bar kiln according to Claim 1, characterized in that the bracing system between the upper (2) and lower (3) parts of the kiln consists of mechanical jacks (24a, 24b) which are spaced from one another in the zone of sectioned dividing walls (9a, 9b).

3. Bar kiln according to Claim 1, characterized in that the rails (4) are constructed of metal insulated by compact refractory fibre (4b) and comprise a lateral frame (4a) on which rollers (12) moving on tracks (15) are mounted.

4. Bar kiln according to Claim 1, characterized in that the bars (1) consist of hollow profile sections, which are constructed of a material selected from among the ordinary steels, the refractory steels, the ceramic materials which have a high content of alumina or the ceramic materials based on recrystallized or non-recrystallized silicon carbide.

5. Bar kiln according to any one of Claims 1 to 4, characterized in that there is provided a system of auxiliary bars (13) disposed at right angles to the carrying bars (1), parallel to the rails (4).

6. Bar kiln according to any one of claims 1 to 5, characterized in that it comprises a reverse cooling system consisting of a device for top blowing (25) and for taking in the hot air (26, 27) at the level of the hearth (3).

7. Bar kiln according to any one of Claims 1 to 4, characterized in that thin plates are provided, which are perforated or non-perforated and which are constructed of ceramic material and which are disposed on the carrying bars.

8. Bar kiln according to one of Claims 1 to 7, characterized in that it comprises a slow-cooling zone exhibiting a refractory material structure (29) at the level of the hearth (3) and immediately subjacent to the carriage of carrying bars (1).

## Patentansprüche

1. Balkenofen oder Durchlaufofen zur schnellen Erwärmung von keramischen Produkten, dadurch gekennzeichnet, daß er einen Aufbau aus Gewölbeabschnitten aufweist, die von einem statischen unteren Teil oder Boden (3) und einem statischen Teil oder Voute (2) gebildet werden, die durch eine Anordnung unterbrochener Verstrebungen (24a, 24b) verbunden sind, sowie ein bewegliches Trägergestell aufweist, welches aus Längsträgern gebildet wird, an denen Trägerstäbe (1) angebracht sind, die zur Aufnahme zu erwärmender Produkte bestimmt sind und sich in dem Ofen quer von Gewölbeabschnitt zu Gewölbeabschnitt mit oder ohne Zwischenträgeraufbau erstrecken.

2. Balkenofen nach Anspruch 1, dadurch gekennzeichnet, daß die Anordnung der Verstrebungen zwischen dem oberen und dem unteren Teil (2 bzw. 3) des Ofens aus mechanischen Hebeblöcken (24a, 24b) besteht, die in dem Bereich der Gewölbeabschnitte (9a, 9b) in gegenseitigem Abstand zueinander angeordnet sind.

3. Balkenofen nach Anspruch 1, dadurch gekennzeichnet, daß die Längsträger (4) aus Metall bestehen, gegeneinander durch hitzebeständige kompakte Fibern (46) isoliert sind und ein Längsgerippe (4a) umfassen, an dem Rollen (12) angebracht sind, die sich auf Schienen (15) abstützen.

4. Balkenofen nach Anspruch 1, dadurch gekennzeichnet, daß die Stäbe (1) aus Hohlprofilen aus einem Material bestehen, das aus gewöhnlichem Stahl, hitzebeständigem Stahl, Keramikmaterialien mit hohem Aluminiumgehalt oder Keramikmaterialen auf der Grundlage von Siliciumcarbid, welches rekristalliert ist oder nicht, ausgewählt ist.

5. Balkenofen nach einem der Ansprüche 1 bis 4, dadurch gekennzeichnet, daß er mit einer Anordnung von Hilfsträgern (13) versehen ist, die rechtwinklig zu den Trägerstäben (1) parallel zu den Längsträgern (4) angeordnet sind.

6. Balkenofen nach einem der Ansprüche 1 bis 5, dadurch gekennzeichnet, daß er eine umgekehrte Abkühleinrichtung umfaßt, die aus einem oberen Gebläse (25) und einer Aufnahmeeinrichtung für erwärmte Luft (26, 27) in Höhe des Bodens (3) besteht.

7. Balkenofen nach einem der Ansprüche 1 bis 4, dadurch gekennzeichnet, daß auf den Trägerstäben dünne Keramikplatten angeordnet sind, die perforiert sind oder nicht.

8. Balkenofen nach einem der Anspruch 1 bis 7, dadurch gekennzeichnet, daß er einen Bereich langsamer Abkühlung aufweist, die in Höhe des Bodens (3) und unmittelbar unter der Anordnung der Trägerstäbe (1) aus einer Schicht aus hitzebe-ständigem Material (29) besteht.

0 148 804

FIG.1

FIG.2

FIG.3

1

FIG. 4

FIG.5

0 148 804

FIG.6

0 148 804

FIG.7

5

FIG.8

FIG.9

FIG.10